# EUROPÄISCHE PATENTANMELDUNG

(11) **EP 3 062 290 A1**
(43) Veröffentlichungstag der Anmeldung: **31.08.2016**
(21) Anmeldenummer: 15195613.3
(22) Anmeldetag: 20.11.2015
(51) Int. Cl.: G06T 7/00

(54) **VERFAHREN ZUR ERMITTLUNG EINES ABBILDS EINES GEGENSTANDS**

(30) Priorität: 26.02.2015 AT 501512015
(71) Anmelder: AIT Austrian Institute of Technology GmbH, 1220 Wien (AT)
(72) Erfinder: Vrabl, Andreas, 2333 Leopoldsdorf (AT); Heiss, Dorothea, 1230 Wien (AT)
(74) Vertreter: Wildhack & Jellinek

(57) **Zusammenfassung**

Die Erfindung betrifft ein Verfahren zur Ermittlung eines Abbilds eines Gegenstands (O) mit einer Mehrzahl von Sensoren (10, 20, 30) umfassend jeweils eine Anzahl von Pixelsensoren (11, 21, 31),
- wobei die Pixelsensoren (11, 21, 31) desselben Sensors (10, 20, 30) jeweils dasselbe Empfindlichkeitsspektrum (S₁, S₂, S₃) aufweisen und die Pixelsensoren (11, 21, 31) unterschiedlicher Sensoren (10, 20, 30) jeweils unterschiedliche Empfindlichkeitsspektren (S₁, S₂, S₃) aufweisen, und
- wobei mit jedem der Sensoren (10, 20, 30) jeweils ein Bild (I₁, I₂, I₃) desselben Teilbereichs des Gegenstands (O) erstellt wird, wobei das Abbild des Gegenstands (O) mit den Bildern (I₁, I₂, I₃) erstellt wird.
Erfindungsgemäß ist vorgesehen,
- dass in den von den einzelnen Sensoren (10, 20, 30) erstellten Bildern (I₁, I₂, I₃) mit jeweils unterschiedlichem Empfindlichkeitsspektrum (S₁, S₂, S₃) nach Abbildern desselben Teilbereichs des Gegenstands (O) gesucht wird, indem einzelne Teilbilder (I_{1,1} ... I_{1,n}, I_{2,1} ... I_{2,n}, I_{3,1} ... I_{3,n}) der Bilder (I₁, I₂, I₃) miteinander korreliert werden, und
- dass miteinander korrelierende Teilbilder (I_{1,1} ... I_{1,n}, I_{2,1} ... I_{2,n}, I_{3,1} ... I_{3,n}) aus den Bilder (I₁, I₂, I₃) ermittelt und einander zugeordnet werden und gegebenenfalls einzelne Bereiche oder Pixel einander zugeordneter Teilbilder (I_{1,1} ... I_{1,n}, I₂,₁ ... I_{2,n}, I_{3,1} ... I_{3,n}) einander aufgrund der Korrelation zugeordnet werden.

## Beschreibung

Die Erfindung betrifft ein Verfahren zur Ermittlung eines Abbilds eines Gegenstands. Schließlich betrifft die Erfindung einen Datenträger mit einem Programm zur Durchführung eines Verfahrens zur Ermittlung eines Abbilds eines Gegenstands.

Um ein Objekt oder eine Szene multi-spektral aufzunehmen, ist eine nach dem Stand der Technik übliche Vorgangsweise, das Objekt oder die Szene mit mehreren Kameras oder Sensoren oder Teilbereichen eines Sensors aufzunehmen, wobei die verschiedenen Kameras, Sensoren oder Teilbereiche des Sensors jeweils über eine unterschiedliche spektrale Empfindlichkeit verfügen.

Es besteht nun das Problem, dass für jeden Objektpunkt ermittelt werden muss, welches Pixel in jedem Sensor mit diesem Objektpunkt korrespondiert, um die Intensitätswerte der Pixel der unterschiedlichen Sensoren korrekt zu einem multi-spektralen Abbild des Objekts zusammenzuführen.

Sind die aufzunehmenden Objekte in der Form einander sehr ähnlich, typischerweise plan, und starr, so ist eine nach dem Stand der Technik übliche Vorgehensweise die Verwendung eines Kalibrierobjekts, insbesondere Kalibrierpapiers, auf dem ein charakteristisches Muster aufgebracht ist, das in den einzelnen Kamerabildern einfach zu erkennen ist, und wodurch ein für alle Mal eine Korrespondenz zwischen den einzelnen Kamerabildern ermittelt werden kann.

Obwohl eine derartige Kalibrierung als erster Schritt oft sinnvoll und berechtigt ist, so ist er in vielen Fällen doch nicht ausreichend. Denn in der Praxis sind die Objekte nicht völlig starr. Wird beispielsweise Papier zum Zweck der automatisierten Qualitätsinspektion an einer Kamera vorbei geführt, so flattert das Papier unweigerlich aufgrund seiner Bewegung. Ein anderes häufiges Problem ist, dass die zu prüfenden Objekte nicht plan sind und/oder sich in ihrer Form unterscheiden.

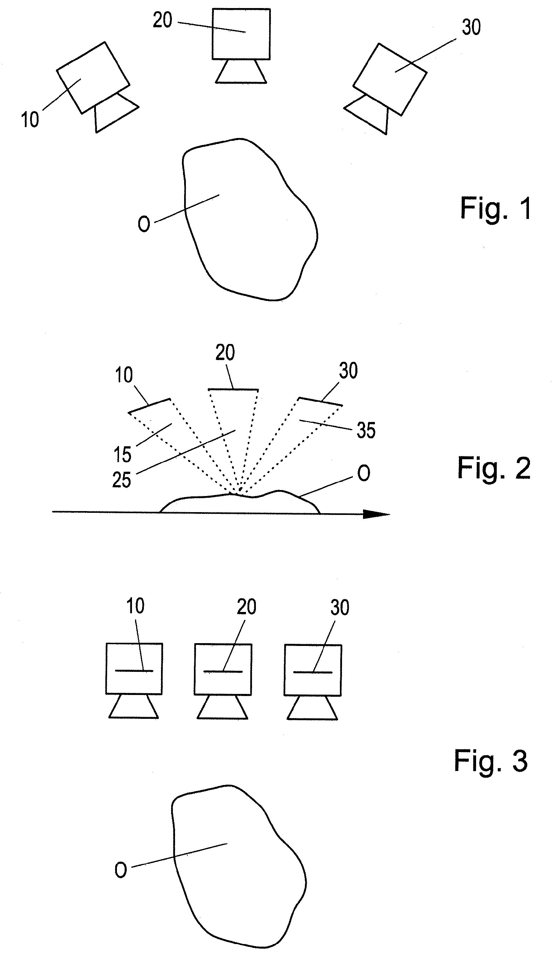

Durch diese Effekte kann eine stabile Korrespondenz zwischen den Kamerabildern nicht vorab nur durch Kalibrierung vorgegeben werden, denn ein Objektpunkt wird, abhängig von seinem Abstand zu den Sensoren, auf jeweils unterschiedlichen Pixeln der Sensoren abgebildet werden, wie in **Fig. 1** dargestellt.

Wird nun simplifizierend eine stabile Korrespondenz zwischen den Kamerabildern, die mit Hilfe des Kalibrierobjekts ermittelt wurde, angenommen, wie dies bei dem Stand der Technik üblich ist, so kommt es zu störenden Farbsäumen an Kanten, die auch eine genaue optische Inspektion der Objekte erschwert oder sogar verhindert.

Ziel der Erfindung ist es, ein Verfahren bereitzustellen, das die Erstellung von Farbbildern mit einer nach dem Stand der Technik üblichen und einfachen Aufnahmeanordnung ermöglicht und dennoch Bilder zur Verfügung stellt, bei denen die demselben Pixel zugeordneten Farbinformationen vom selben Objektpunkt oder Oberflächenabschnitt auf den abgebildeten Gegenstand herrühren.

Die Erfindung löst diese Aufgabe bei einem Verfahren der eingangs genannten Art mit dem kennzeichnenden Merkmal des Patentanspruchs 1. Bei einem Verfahren zur Ermittlung eines Abbilds eines Gegenstands mit einer Mehrzahl von Sensoren umfassend jeweils eine Anzahl von Pixelsensoren,
- wobei die Pixelsensoren desselben Sensors jeweils dasselbe Empfindlichkeitsspektrum aufweisen und die Pixelsensoren unterschiedlicher Sensoren jeweils unterschiedliche Empfindlichkeitsspektren aufweisen, und
- wobei mit jedem der Sensoren jeweils ein Bild desselben Teilbereichs des Gegenstands erstellt wird, wobei das Abbild des Gegenstands mit den Bildern erstellt wird ist vorgesehen, dass in den von den einzelnen Sensoren erstellten Bildern mit jeweils unterschiedlichem Empfindlichkeitsspektrum nach Abbildern desselben Teilbereichs des Gegenstands gesucht wird, indem einzelne Teilbilder der Bilder miteinander korreliert werden, und
- dass miteinander korrelierende Teilbilder aus den Bilder ermittelt und einander zugeordnet werden und gegebenenfalls einzelne Bereiche oder Pixel einander zugeordneter Teilbilder einander aufgrund der Korrelation zugeordnet werden.

Die Erfindung nutzt dabei insbesondere den Umstand aus, dass die genutzte Korrelation auch für Bildabschnitte mit unterschiedlichen Farben möglich ist. In den meisten Aufnahmen realer Gegenstände sind die einzelnen Farbkanäle jeweils sehr stark korreliert. Dass die einzelnen Farbkanäle vollkommen unkorreliert sind, ist hingegen nur selten der Fall. Daher ergeben sich besonders einfache Möglichkeiten der Detektion miteinander korrelierender Bereiche.

Es ist jedoch sehr wohl möglich, dass die einzelnen Farbkanäle des Abbilds eines Gegenstands antikorreliert sind. Je nach Korrelationsverfahren durch Anwendung eines entsprechenden Korrelationsverfahrens auch Antikorrelation berücksichtigt werden.

Zur einfachen Aufnahme bewegter Gegenstände kann vorgesehen sein, dass Zeilensensoren als Sensoren verwendet werden, deren Pixelsensoren in Form von Zeilen auf dem jeweiligen Sensor angeordnet sind, oder dass als Sensoren Sensorzeilen von Flächensensoren verwendet werden,
b) dass der abzubildende Gegenstand relativ zu den Sensoren, insbesondere normal zur Zeilenrichtung der Zeilensensoren oder Sensorzeilen, bewegt wird und dabei durch den Aufnahmebereich der Sensoren gelangt,
c) dass als Teilbilder jeweils von den Sensoren erstellte Zeilenbilder herangezogen werden. Ein zusätzlicher Nutzen der Erfindung ist es, dass die Korrelation der Bildabschnitte für das Erkennen dreidimensionaler Strukturen genutzt werden kann. So kann eine Aufnahmeanordnung, die der multi-spektralen Aufnahme von Objekten dient, auf besonders vorteilhafte und einfache Weise zusätzlich zur Bestimmung von Tiefeninformation genutzt werden.

Diese besonders vorteilhafte Methode zur Bestimmung der Tiefeninformation der miteinander korrelierten Bilder sieht vor, dass aufgrund des Versatzes eine Tiefeninformation erstellt wird, die den Abstand oder die Relativposition des auf die korrelierenden Bereiche abgebildeten Teilbereichs des Gegenstands zu den Sensoren oder zu einem in Bezug auf die Sensoren festgelegten Referenzpunkt angibt, und - dass der Abstand oder die Relativposition zumindest einem der miteinander korrelierenden Bereiche zumindest einem der korrespondierenden Bereiche des Bilds zugeordnet wird.

Ein Verfahren zur Bestimmung der Relativposition zwischen der Aufnahmeanordnung und dem aufgenommenen Gegenstand sieht vor, dass die Relativposition des in den Bildern abgebildeten Teils des Gegenstands auf Grundlage der durch die Lage und Ausrichtung der Sensoren und der Pixelsensoren auf den Sensoren sowie gegebenenfalls auf Grundlage der Beschaffenheit, Form, Lage und Ausrichtung einer den Pixelsensoren vorgeschalteten optischen Einheit, insbesondere eines Objektivs, ermittelt wird.

Die Erfindung ist auch deshalb besonders vorteilhaft, weil für jedes einzelne multi-spektrale Pixel eine Tiefeninformation bestimmt werden kann. Daher sieht eine besonders vorteilhafte Weiterbildung der Erfindung, mit der ein Bild erstellt werden kann, das einen zusätzlichen, die Höhe bzw. den Abstand des abgebildeten Gegenstands von der Aufnahmeeinrichtung indizierenden Kanal aufweist, vor, dass für die einzelnen Pixel zumindest eines der Bilder die jeweiligen den Pixeln zugeordneten Relativpositionen oder Abstände ermittelt werden und diese Relativpositionen oder Abstände (d) dem Abbild als weiterer Kanal zugeordnet werden.

Zur Erstellung eines Farbbilds ohne störende Farbsäume kann vorgesehen sein, dass der Unterschied der jeweiligen Bildposition der miteinander korrelierenden Bereiche in unterschiedlichen Bilder ermittelt und als Versatz den jeweiligen Bereichen zugeordnet wird, - dass die einzelnen Bilder miteinander aufgrund des Versatzes der miteinander korrelierenden Bereiche in Übereinstimmung gebracht werden und ein Abbild erstellt wird.

Weiters kann vorgesehen sein, dass vor der Ermittlung eines Abbilds eines Gegenstands ein Abbild eines Referenzgegenstands an einer vorgegebenen Relativposition gegenüber den Sensoren oder mit einer vorgegebenen Relativbewegung gegenüber den Sensoren ermittelt wird, wobei eine Referenzzuordnung zwischen den einzelnen von den Sensoren erstellten Bildern festgelegt wird und
anschließend ein Gegenstand nach einem der vorangehenden Ansprüche aufgenommen wird, der auf dieselbe vorgegebene Relativposition gegenüber den Sensoren platziert wird oder der mit derselben vorgegebenen Relativbewegung gegenüber den Sensoren bewegt wird, wobei die Zuordnung zwischen den von den Sensoren aufgenommenen Bildern des Objekts ausgehend von der Referenzzuordnung erstellt wird.

Beim Überlagern der einzelnen Farbkanäle wird dabei durch die eine erste Referenz- bzw. Grobzuordnung der Suchbereich für die Korrelation für die endgültige Zuordnung verkleinert und damit die endgültige Zuordnung stark beschleunigt.
Bei der Berechnung von Tiefeninformation durch Referenzzuordnung wird der Fehler durch die nicht völlige Parallelität einzelner Sensorzeilen eliminiert. Sind die Sensorzeilen nämlich nicht auf einem gemeinsamen Träger oder Trägerchip aufgebracht, sind sie natürlich nie völlig parallel, sodass in manchen Fällen eine Kompensation wünschenswert ist. Aber selbst die Sensorzeilen auf einem gemeinsamen Träger angeordnet sind, kann die Trägerebene zu dem Objekt nach allen Raumrichtungen hin verdreht sein, sodass auch in diesem Fall eine Korrektur wünschenswert sein kann.
Der durch diese Maßnahme kompensierte Fehler ist ein systematischer Fehler und würde ohne Korrektur die Berechnung der Tiefeninformation in geringem Ausmaß verfälschen. Durch die Maßnahme wird die ermittelte Tiefeninformation folglich genauer.

Bevorzugterweise können zur Korrelation der Teilbereiche oder Teilbilder auch Kantenbilder herangezogen werden, die durch Anwendung eines Kantenfilters auch die einzelnen Teilbilder erzeugt werden. Die Kanten des Objekts stimmen unabhängig davon überein, ob die einzelnen Farbkanäle des Abbilds korreliert oder antikorreliert sind. Korrespondierende Teilbereiche können einander mit größerer Wahrscheinlichkeit zugeordnet werden.

Eine bevorzugte Ausführungsform der Erfindung, die ein vorteilhaftes Matching zweier Teilbilder aus unterschiedlichen Bildkanälen ermöglicht, sieht vor, dass die Teilbilder untereinander korreliert und einander zugeordnet werden indem eines der von den einzelnen Sensoren erstellten Bilder als Masterbild ausgewählt wird und die einzelnen Bereiche oder Pixel der jeweils anderen Bilder den Teilbildern dieses Masterbilds zugeordnet werden, indem
a) sowohl im Masterbild als auch in den anderen Bildern einander entsprechende oder gleiche oder nach den gleichen Grundlagen gebildete Koordinatensysteme vorgegeben werden,
b) im Masterbild eine vorgegebene Anzahl von Passpunkten in Form von markanten Bildpunkten oder -bereichen gewählt oder festgelegt wird,
c) in den anderen Bildern nach den, den im Masterbild bestimmten Passpunkten, entsprechenden Passpunkten gesucht wird,
d) dass mit den in den anderen Bildern aufgefundenen Passpunkten und den im Masterbild vorgegebenen Passpunkten die durch eine unterschiedliche Lage der Passpunkte im Masterbild und in den anderen Bildern im Koordinatensystem bedingten Verschiebungsvektoren ermittelt werden, mit denen die jeweiligen Passpunkte des einen Bildes in die Passpunkte des anderen Bildes übergeführt werden können,
e) dass mit den für die Passpunkte im Masterbild erhaltenen Verschiebungsvektoren durch Interpolation weitere Verschiebungsvektoren für eine bestimmte Anzahl der, vorzugsweise für alle, Bildpunkte des Masterbildes jeweils ein zugehöriger Verschiebungsvektor berechnet wird, der die Lage des dem jeweiligen Bildpunkt des Masterbildes zugeordneten Punktes oder Bildpunktes in den anderen Bildern festlegt.

Das allgemeine Prinzip ist Folgendes: Sobald ein Objekt mehrfach und unter unterschiedlichen Winkeln aufgenommen wird, unterscheiden sich diese Abbilder. Und zwar befindet sich das Abbild ein und desselben Objektpunktes in den verschiedenen Aufnahmen an unterschiedlichen Positionen. Der Versatz zwischen diesen Positionen ist umgekehrt proportional zu dem Abstand des Objektpunktes zu den Sensorflächen (Stereoprinzip).

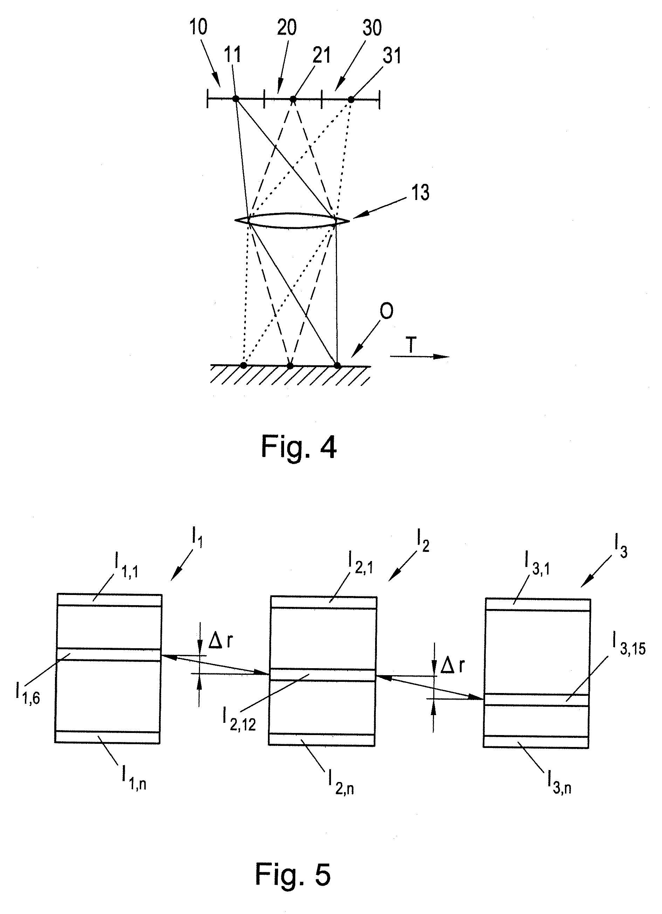

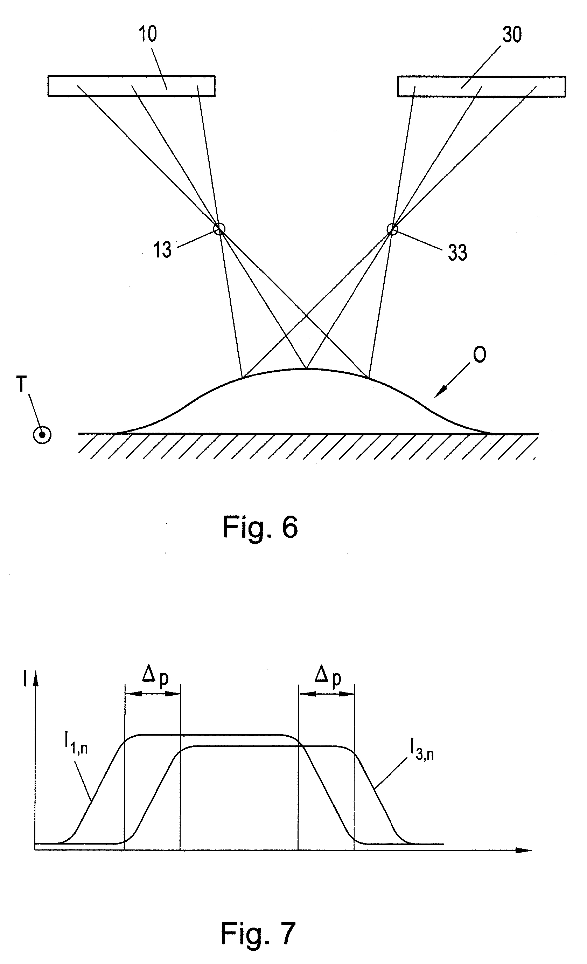

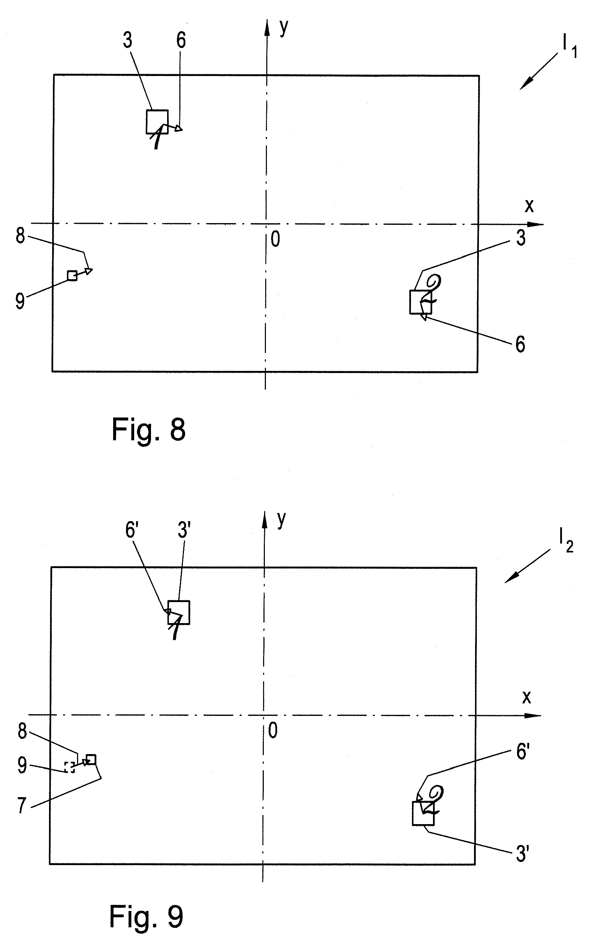

Einige Ausführungsformen der Erfindung sind anhand der folgenden Zeichnungsfiguren näher dargestellt. **Fig. 1 bis 3** zeigen Aufnahmeeinrichtungen, die mit einem erfindungsgemäßen Verfahren betrieben wird. **Fig. 4** zeigt schematisch die Aufnahme von Teilbildern von bewegten Gegenständen, bei denen das zu untersuchende Objekt normal zur Zeilenrichtung der Zeilensensoren bewegt wird. **Fig. 5** zeigt die Verarbeitung von Bildern, die bei den **Fig. 4** dargestellten Aufnahmen ermittelt wurden. **Fig. 6** zeigt schematisch die Aufnahme von Teilbildern von bewegten Gegenständen, bei denen das zu untersuchende Objekt orthogonal zur Zeilenrichtung der Zeilensensoren bewegt wird. **Fig. 7** zeigt schematisch die Verarbeitung von Bildern, die bei den **Fig. 6** dargestellten Aufnahmen ermittelt wurden. **Fig. 8** und **Fig. 9** zeigen eine weitere Ausführungsform der Erfindung, mit der ein vorteilhaftes Matching zweier Teilbilder aus unterschiedlichen Bildkanälen ermöglicht wird.

Bei einer **ersten Ausführungsform** der Erfindung, dargestellt in **Fig. 1****,** ist eine Mehrzahl von drei Sensoren 10, 20, 30 auf ein Objekt O ausgerichtet. Unter einer Mehrzahl von Sensoren wird im Rahmen aller Ausführungsformen der Erfindung eine Anzahl von zwei oder mehr Sensoren verstanden. Die Sensoren 10, 20, 30 können im Prinzip als Flächensensor ausgebildet sein, vorteilhafter werden jedoch die Zeilensensoren verwendet, die auf dieselbe Objektzeile des Gegenstandes O ausgerichtet sind, wie in **Fig. 2** im Aufriss dargestellt.

Die Zeilensensoren 10, 20, 30 umfassen jeweils eine Anzahl von auf jeweils einer geraden Linie angeordneten Pixelsensoren 11, 21, 31. Vor den Sensoren 10, 20, 30 sind jeweils optische Einheiten angeordnet. Weiters sind in **Fig. 2** auch die Sehstrahlen 15, 25, 35 der Sensoren 10, 20, 30 dargestellt.

Die Pixelsensoren 11, 21, 31 eines Sensors 10, 20, 30 weisen jeweils dasselbe Empfindlichkeitsspektrum S₁, S₂, S₃ auf. Die Pixelsensoren 11, 21, 31 unterschiedlicher Sensoren 10, 20, 30 jeweils unterschiedliche Empfindlichkeitsspektren S₁, S₂, S₃ auf. Jeder der Sensoren 10, 20, 30 verfügt über ein eigenes Objektiv 21, 22, 23 mit einem Farbfilter.

Es bestehen bei allen Ausführungsformen der Erfindung grundsätzlich mehrere bekannte Möglichkeiten, die Empfindlichkeitsspektren S₁, S₂, S₃ unterschiedlicher Pixelsensoren 11, 21, 31 voneinander unterschiedlich festzulegen. So kann beispielsweise jeder Sensor 10, 20, 30 mit einem Farbfilter mit jeweils unterschiedlichen Empfindlichkeitsspektren S₁, S₂, S₃ beschichtet sein oder aufgrund seiner Bauart für unterschiedliche Empfindlichkeitsspektren S₁, S₂, S₃ sensitiv sein. Alternativ ist es möglich, die vor den Sensoren 10, 20, 30 angeordneten optischen Einheiten 13, 23, 33 mit unterschiedlichen Filtermaterialien auszustatten.

Jeder der Sensoren 10, 20, 30 erstellt jeweils ein Bild I₁, I₂, I₃ des Objekts O. Die Sensoren 10, 20, 30 sehen das Objekt O jeweils unter einem unterschiedlichen Winkel. Hierbei besteht im Stand der Technik, wie schon eingangs erwähnt, das Problem, dass die Registrierung der von den Sensoren 10, 20, 30 aufgenommenen Bildern, d.h. das Vorgehen, mit dem die von den Sensoren 10, 20, 30 erstellten Bilder in Übereinstimmung gebracht und zu einem Farbbild vereinigt werden, nicht aufgrund einer vorab bekannten Verschiebung möglich ist. Dieses Problem tritt insbesondere dann auf, wenn die aufgenommenen Objekte O in der Höhe variieren und/oder flattern, rotieren etc.

Dieses Problem tritt insbesondere dann auf, wenn die aufgenommenen Objekte O in der Höhe variieren und/oder flattern, rotieren etc. Eine zusätzliche Erschwernis ist, dass es schwierig ist, die Sensoren 10, 20, 30 vollkommen parallel zu montieren. Im Regelfall sind diese minimal gegeneinander verdreht, sodass die einzelnen von den Sensoren erstellten Bilder - selbst bei konstantem Abstand des abzubildenden Gegenstands zu den Sensoren - leicht gegeneinander verschoben und verdreht sind.

Mittels der in Folge dargestellten Mehrfarben-Korrelation ist diese Registrierung der erstellten Bilder möglich. Dieses Vorgehen hat zudem den Vorteil, dass gleichzeitig ohne wesentlichen zusätzlichen Rechenaufwand eine Tiefeninformation ermittelt werden kann. Dies kann mit Hilfe eines an sich bekannten Stereoverfahrens erfolgen. Solche Verfahren benötigen nämlich üblicherweise eine Disparität, d.h. einen Versatz der Pixel in den zueinander registrierten Bildern, den das vorstehend genannte Verfahren zur Korrelation mit Bildern unterschiedlicher Farbe ohnehin liefert.

In einer Alternative zur ersten Ausführungsform der Erfindung ist es, wie bei jedem Stereosystem und den meisten Mehrkamerasystemen, auch möglich, dass die Zeilensensoren in einer Ebene angeordnet sind, wobei die Sensorenzeilen zueinander parallel stehen. **(****Fig. 3****).**

Bei einer **zweiten Ausführungsform** der Erfindung, dargestellt in **Fig. 4****,** wird der Gegenstand O wird mittels einer Positionierungseinheit an den einzelnen Sensoren 10, 20, 30 vorbei bewegt, wobei zu vorgegebenen Zeitpunkten jeder Sensor 10, 20, 30 jeweils ein Teilbild des Gegenstands O erstellt. Auf jedes dieser Teilbilder I_{1,1} ... I_{1,n}, I_{2,1} ... I_{2,n}, I_{3,1} ... I_{3,n} wird jeweils ein zeilenförmiger Teilbereich des Gegenstands O abgebildet. Ist der abzubildende Gegenstand O wie im vorliegenden Fall elastisch, besteht die Möglichkeit, dass sich der Abstand zu den Sensoren 10, 20, 30 ändert, wie dies beim Gegenstand O' der Fall ist. Befindet sich der jeweils abgebildete Teil des Gegenstands O in einem vorgegebenen Abstand zu den Sensoren, so treffen die Sehstrahlen 15, 25, 35 auf denselben Oberflächenbereich des Gegenstands O. Ist der Gegenstand O' hingegen näher bei den Sensoren 10, 20, 30, treffen sich die Sehstrahlen 15, 25, 35 der unterschiedlichen Sensoren 10, 20, 30 nicht im selben Gegenstandsbereich.

Jeder Sensor 10, 20, 30 erstellt jeweils ein Teilbild I_{1,1} ... I_{1,n}, I_{2,1} ... I_{2,n}, I_{3,1} ... I_{3,n} des jeweils im Aufnahmebereich des Sensors 10, 20, 30 befindlichen Teilbereichs des Gegenstands O in Form eines Zeilenbilds. Die einzelnen vom selben Sensor 10, 20, 30 im Verlauf der Relativbewegung des Gegenstands O erstellten Zeilenbilder oder Teilbilder werden jeweils zu einem zweidimensionalen Bild I₁, I₂, I₃ zusammengesetzt, wobei den hintereinander erstellten Teilbilder I_{1,1} ... I_{1,n}, I_{2,1} ... I_{2,n}, I_{3,1} ... I_{3,n} bzw. Zeilenbilder jeweils entsprechend der Reihenfolge ihrer Aufnahme in untereinander liegende Zeilen des Bildes I₁, I₂, I₃ abgebildet werden. Im Stand der Technik bestehen zum Teil erhebliche Probleme, die so erstellten Bilder I₁, I₂, I₃ miteinander so in Übereinstimmung zu bringen, dass jeweils die Abbilder desselben Gegenstandsbereichs des Gegenstands O einander zugeordnet werden können. Grund hierfür ist, dass wegen unterschiedlicher Abstände der aufgenommenen Gegenstandsbereiche des Gegenstandes O von den Sensoren 10, 20, 30 bei der Aufnahme sowie aufgrund der unterschiedlichen Ausrichtungen der Sehstrahlen der Sensoren 10, 20, 30 ein pixelweises einfaches Überlagern der Bilder I₁, I₂, I₃ gerade an den Rändern von Gegenständen zu Farbungenauigkeiten führt.

Bei der Registrierung der einzelnen Bilder I₁, I₂, I₃ zueinander werden in den so zusammengesetzten Flächenbildern, die mit unterschiedlichem Empfindlichkeitsspektrum aufgenommen wurden, jeweils die Abbilder derselben Objektpunkte gesucht, damit die einzelnen Bilder korrekt übereinandergelegt werden können. Das heißt es werden diejenigen Teilbereiche der Bilder I₁, I₂, I₃ durch Korrelation ermittelt, die demselben Objektpunkt oder Objektbereich entsprechen und dann werden diese korrespondierenden Teilbereiche überlagert.

Dazu wird in einem der Bilder I₁, I₂, I₃ ein Teilbereich ausgewählt und mittels Korrelation in den anderen Bildern gesucht, wobei die jeweiligen ermittelten Intensitätswerte, d.h. die von den einzelnen Pixelsensoren 11, 21, 31 erstellten Werte, für die Korrelation herangezogen werden.

Zur Bestimmung der Korrelation können unterschiedliche Korrelationsmaße oder Abstandsmaße herangezogen werden, die insgesamt aus dem Stand der Technik bekannt sind. Der jeweilige Teilbereich in den anderen Bildern mit der höchsten Korrelation mit dem ursprünglich ausgewählten Teilbereich wird als der übereinstimmende Teilbereich angenommen.

Bevorzugterweise können zur Korrelation der Teilbereiche oder Teilbilder auch Kantenbilder herangezogen werden, die durch Anwendung eines Kantenfilters auch die einzelnen Teilbilder erzeugt werden. Die so erstellten Kantenbilder werden mit allgemein bekannte Korrelationsverfahren untereinander verglichen.

Um nun die verschiedenen Bilder I₁, I₂, I₃ möglichst gut zu rektifizieren, werden immer diejenigen Teilbereiche der unterschiedlichen Bilder mit den übereinstimmenden Teilbereichen der anderen Bildern überlagert bzw. es werden übereinstimmende Teilbereiche aufeinander abgebildet.

Falls für einige Bildbereiche keine übereinstimmenden Teilbereiche in den anderen Bildern gefunden werden können, z.B. weil die Korrelationsmaße kein klares Maximum aufweisen, dann kann beim Überlagern dieser Teilbereiche, wie folgt, interpoliert werden.

Kann ein Teilbereich A eines Bildes nicht mit einem Teilbereich A' eines anderen Bildes korreliert werden, es gibt aber zwei in der Nähe des Teilbereichs A liegende Teilbereiche B und C die jeweils mit Bereich B' und C' in dem anderen Bild korreliert werden können, so kann die Position des mit A korrelierenden Teilbereichs A' durch Interpolation zwischen B' und C' ermittelt werden.

Durch die Verwendung von Zeilensensoren und dadurch, dass die Zeilen zumindest ungefähr auf die selbe Objektzeile sehen bzw. auf sie dieselbe Objektzeile abgebildet wird, vereinfacht sich die Suche nach den korrespondierenden Objektpunkten und übereinstimmenden Bildbereichen. Im einfachsten Fall braucht nur innerhalb der zum selben Zeitpunkt aufgenommenen Bildzeilen der einzelnen Zeilensensoren 10, 20, 30 nach Übereinstimmung gesucht werden. Allenfalls kann die Suche zusätzlich auch in unmittelbar zuvor oder danach aufgenommenen Bildzeilen vorgenommen werden.

Ist die Zuordnung zwischen Pixeln oder Bildbereichen der einzelnen Bilder bekannt, kann optional eine Tiefeninformation ermittelt werden. Sobald ein übereinstimmende Teilbereiche oder Pixel ermittelt wurden, wird deren Position bzw. deren gegenseitiger Versatz Δp nach einer allgemein bekannten Vorgangsweise sehr einfach ermittelt. Aus diesem Versatz Δp kann mittels der bekannten Stereo-Verfahren, zB durch Triangulation, eine Tiefeninformation ermittelt werden.

Dies ist vor allem auch dann vorteilhaft, wenn die Zeilensensoren 10, 20, 30, wie in **Fig. 4** dargestellt, auf einem gemeinsamen Träger aufgebracht sind, insbesondere, wenn die Zeilensensoren Teil einer Kamera sind und ein gemeinsames Objektiv 13 verwenden. In diesem Fall ist auf jedem Zeilensensor 10, 20, 30 ein eigener Farbfilter aufgebracht.

Hierbei wird ein Flächensensor mit mehreren als Sensoren 10, 20, 30 fungierenden Zeilensensoren verwendet, wobei jeweils eine Zeile einen roten Zeilensensor 10, eine Zeile einen grünen Zeilensensor 20 und eine Zeile einen blauen Zeilensensor 30 bildet. Die Sensorzeilen stehen normal auf die Darstellungsebene der **Fig. 4** und haben zueinander einen Abstand, der typischerweise ein Vielfaches der Pixelbreite beträgt.

Das Objekt O wird entlang der in **Fig. 4** dargestellten Transportrichtung T durch den Aufnahmebereich der Sensoren 10, 20, 30 bewegt, wobei die Transportrichtung T normal zur Zeilenrichtung der Zeilensensoren 10, 20, 30 liegt. Aufgrund des Abstands zwischen den Zeilensensoren werden die drei Farbanteile desselben Bereichs des aufzunehmenden Objektes O jedoch nicht zum identischen Zeitpunkt aufnehmen. Wie in **Fig. 4** gezeigt, werden zum selben Zeitpunkt jeweils unterschiedliche Oberflächenbereiche auf die einzelnen Sensoren 10, 20, 30 abgebildet bzw. wird derselbe Oberflächenbereich zu unterschiedlichen Zeitpunkten auf die Sensoren 10, 20, 30 abgebildet. Bei der Inspektion von z.B. rotierenden Objekten kommt es nun zum Farbverschiebungen z.B. an einer Objektkante. Dieser Effekt ist bei nicht bewegten starren, also nicht flatternden oder rotierenden Objekten - etwa bei der Oberflächeninspektion von Bahnwaren - relativ einfach annäherungsweise korrigierbar. Daher werden Kameras mit diesem Prinzip oftmals für solche linearen Applikationen eingesetzt - die sich kompakt und kostengünstig produzieren lassen. Zudem hat man den Vorteil, Standardobjektive einsetzen zu können.

Tatsächlich ist die Voraussetzung der Starrheit nur selten gegeben und Bahnware flattert in der Praxis oft erheblich, vor allem wegen steigender Produktionsgeschwindigkeit. Weiters soll die Auswertung immer genauer sein und eine annäherungsweise Korrektur ist oft nicht ausreichend.

Auch in diesem Fall sieht jeder Zeilensensor 10, 20, 30 das Objekt O jeweils unter einem anderen Winkel, daher ist einerseits die Ermittlung einer Tiefeninformation möglich, andererseits ist die Registrierung bzw. Überlappung der spektralen Einzelbilder durch den zeitlichen Versatz noch komplexer. Daher ist das erfindungsgemäße Vorgehen in noch mehr Fällen von Vorteil.

Bei der **dritten Ausführungsform** der Erfindung **(****Fig. 6****)** sind mehrere, typischerweise zwei bis vier, Zeilensensoren 10, 30 nebeneinander - also quer, insbesondere normal, zur Transportrichtung T, mit jeweils einem Objektiv, wobei die einzelnen Objektive jeweils einen anderen Farbfilter haben. Eines der Objektive kann auch völlig transparent sein bzw. nicht aus Filtermaterial bestehen.

Bei dieser Ausführungsform werden Objektzeilen von allen Zeilensensoren 10, 30 gleichzeitig aufgenommen. Eine Zuordnung kann bereits innerhalb der gleichzeitig erstellten Teilbilder I_{1,1} ... I_{1,n}, I_{2,1} ... I_{2,n}, I_{3,1} ... I_{3,n} vorgenommen werden. Treten identische oder ähnliche Strukturen in allen Teilbildern auf, so können die einzelnen Pixel oder Teilbereiche der Teilbilder I_{1,1} ... I_{1,n}, I_{2,1} ... I_{2,n}, I_{3,1} ... I_{3,n} einander zugeordnet werden. Zudem kann auch der auftretende Versatz Δp ermittelt werden und auf diese Weise eine Tiefeninformation gewonnen werden. **(****Fig. 7****)**

Bei einer **vierten Ausführungsform** der Erfindung, die nicht in den Fig. dargestellt ist, ist vorgesehen, dass ein einziger Zeilensensor verwendet wird, bei dem einzelne Abschnitte der Sensorzeile als Sensoren 10, 20, 30 fungieren. Vor jedem Abschnitt der Sensorzeile befindet sich jeweils ein Objektiv mit unterschiedlichem Farbfilter. Eines der Objekte kann auch transparent sein bzw. nicht aus Filtermaterial bestehen.

Bei einer **fünften Ausführungsform** der Erfindung wird ein Flächensensor mit drei oder vier Zeilensensoren 10, 20, 30 (RGB oder RGB + IR) verwendet, die in Transportrichtung hintereinander liegen, wobei mehrere Objektive nebeneinander, d.h. quer/normal zur Transportrichtung liegen, die jeweils einen anderen Farbfilter haben, wobei ein Objektiv auch keinen Farbfilter haben kann. Dieses Vorgehen stellt eine Kombination der zweiten und vierten Ausführungsform der Erfindung dar, wobei eine Suche nach übereinstimmenden Abbildern sowohl im Bildbereich normal, als auch in Transportrichtung vorgenommen werden kann.

Die Erstellung der einzelnen Zeilenbilder sowie die Zusammensetzung der Zeilenbilder zu einem zweidimensionalen Bild bzw. zu einem farbigen Abbild des Gegenstands O, die Korrelation der einzelnen Bereiche der Bilder I₁, I₂, I₃ sowie die sowie die Bestimmung des Abstands d oder der Relativposition Δr kann bei allen Ausführungsformen der Erfindung genau so wie bei der ersten Ausführungsform der Erfindung vorgenommen werden.

Für die einzelnen Pixel zumindest eines der Bilder I₁, I₂, I₃ können die jeweiligen den Pixeln 11, 21, 31 zugeordneten Relativpositionen Δr oder Abstände d ermittelt werden. Diese Relativpositionen Δr oder Abstände d können dem so erstellten Farbbild als weiterer Kanal zugeordnet werden.

Es ist nicht zwingend erforderlich, dass sich aufgrund der Aufnahme ein Versatz von zwei Abbildern desselben Objektbereichs in zwei von unterschiedlichen Sensoren 10, 20, 30 aufgenommenen Bildern ausschließlich in einer Koordinatenrichtung des Abbilds ergibt. Bei allen Ausführungsformen der Erfindung können die in **Fig. 5** und in **Fig. 7** dargestellten Versätze in beiden Bildrichtungen gleichzeitig auftreten. Auch in diesen Fällen besteht die Möglichkeit, einzelne Teilbilder der Bilder miteinander zu korrelieren und dementsprechend eine Zuordnung einzelner Teilbereiche der Bilder zu schaffen, aufgrund der die Erstellung von Abbildern, dh von Farbbildern sowie von Bildern mit Tiefeninformation, möglich ist.

Mit einem bevorzugten Ausführungsbeispiel der Erfindung ist es möglich, einzelne die Zuordnung der einzelnen Bildpunkte in den einzelnen Farbbildern zueineander bevorzugt vornehmen zu können.

In **Fig. 8** und **Fig. 9** ist ein Farbbild mit zwei Bildkanälen dargestellt, dessen beide Kanäle in Form von Bildern dargestellt sind. Aus den Bildern wird eines als Masterbild I₁ **(****Fig. 8****)** ausgewählt, an das das andere Bild, im Folgenden Gegenstandsbild I₂ bezeichnet in seiner Form angepasst wird **(****Fig. 9****).** Selbstverständlich ist es auch möglich, dieses Vorgehen bei Vorliegen von mehreren Farbkanälen mit allen Farbkanälen vorzunehmen. Bevorzugt kann dabei derselbe Farbkanal für das Masterbild I₁ herangezogen werden; dies ist jedoch nicht zwingend erforderlich.

Im Masterbild I₁ und im Gegenstandsbild I₂ werden Koordinatensysteme errichtet. Vorteilhafterweise wird jeweils ein kartesisches Koordinatensystem x, y verwendet. Die beiden eingesetzten Koordinatensysteme sollten einander entsprechen bzw. nach den gleichen Grundlagen gebildet sein, sodass der erforderliche Rechenaufwand, um Gegebenheiten in einem Koordinatensystem in ein anderes Koordinatensystem aufwendig umrechnen zu müssen, entfällt oder zumindest klein ist.

Der Ursprung 0 des Koordinatensystems kann an gleichen oder unterschiedlichen Bildpunkten bzw. Orten des Masterbildes I₁ bzw. des Gegenstandsbildes I₂ liegen. Bevorzugt ist es, wenn dieselbe, insbesondere charakteristische, Lage in beiden Bildern I₁, I₂ gewählt wird, z.B. im Bildmittelpunkt oder in einen Eckpunkt.

Des Weiteren wird im Masterbild I₁ eine vorgegebene Anzahl von Passpunkten 3 festgelegt. Derartige Passpunkte 3 sind markante Bildpunkte bzw. Aggregationen von Bildpunkten, die aufgrund ihres Kontrastes ihrer Gradienten und/oder Kanten oder weiterer Merkmale charakteristisch sind und leicht wiedergefunden werden können. In der Zeichnung wurden diese Bildbereiche 3 derart gewählt, dass sie die charakteristischen Spitzen der Ziffern "1" und "2" darstellen. Derartige charakteristische Bildbereiche können durch entsprechende Bilderkennungsverfahren leicht aufgefunden werden. Derartige Bereiche werden im Folgenden als Passpunkt bezeichnet. Der Verschiebungsvektor bezieht sich dabei auf einen ausgewählten Punkt des Bereiches, vorzugsweise dem Mittelpunkt.

Die bisher beschriebenen Verfahrensschritte können in beliebiger Reihenfolge abgewickelt bzw. durchgeführt werden. Als weiterer Verfahrensschritt ist vorgesehen, dass im Gegenstandsbild I₂ nach den durch das Masterbild I₁ vorgegebenen, entsprechenden Passpunkten 3' gesucht wird. Diese Passpunkte 3' befinden sich im Gegenstandsbild aufgrund an einer gegenüber der Lage im Masterbild I₁ unterschiedlichen, d.h. transformierten, Lage. Sobald diese Passpunkte 3' im Gegenstandsbild I₂ festgestellt wurden - wobei es durchaus vorkommen kann, dass einige entsprechende Passpunkte 3' nicht aufgefunden werden - werden für die einander entsprechenden Passpunkte 3 bzw. 3' die jeweiligen Verschiebungsvektoren 6 bzw. 6' ermittelt, mit denen die Passpunkte 3 in die entsprechenden Passpunkte 3' übergeführt werden können oder vice versa.

Basierend auf diesen Verschiebungsvektoren 6 kann nunmehr für eine vorgegebene Anzahl von oder für sämtliche Bildpunkte(n) bzw. Pixel des Masterbildes I₁ jeweils ein zugehöriger Verschiebungsvektor 8 berechnet werden. Dieser zugehörige Verschiebungsvektor 8 gibt die Lage des Bildpunktes 12 im Gegenstandsbild 2 an, der einem vorgegebenen bzw. dem jeweiligen Bildpunkt 9 im Masterbild I₁ entspricht. Die Bildpunkte 12 im Gegenstandsbild I₂ werden im Subpixelbereich bestimmt, d.h. die Verschiebungsvektoren 8 müssen nicht exakt in Bildpunkten 12 des Gegenstandsbildes 2 enden, sondern die Endpunkte der Verschiebungsvektoren 8 können auch im Subpixelbereich liegen.

Es ist durch diese beschriebene Vorgangsweise nunmehr ein Zusammenhang zwischen den Bildpunkten 9 des Masterbildes I₁ und den Bildpunkten bzw. Punkten 12 im Gegenstandsbild 2 über die zugehörigen Verschiebungsvektoren 8 und Lagekoordinaten der Punkte im Gegenstandsbild 2 hergestellt.

Für die Ermittlung der Ähnlichkeit bzw. Übereinstimmung der Parameterwerte der einzelnen Bildpunkte 9 des Masterbildes I₁ und der entsprechenden Parameterwerte der zugeordneten Punkte 12 des Gegenstandsbildes I₂ erfolgt somit ein Vergleich der tatsächlichen Parameterwerte der Bildpunkte 9 des Masterbildes I₁ mit rechnerisch ermittelten Lagepunkten 12 im Gegenstandsbild 2, für welche die Eigenschaften bzw. Parameterwerte durch eine Interpolation von Parameterwerten entsprechend benachbarter bzw. umliegender Bildpunkte 12 herangezogen werden.

Es ist ferner möglich, dass das Masterbild I₁ oder Teile davon und/oder das Gegenstandsbild I₂ oder Teile davon, insbesondere vor der Ermittlung oder Festlegung der Passpunkte 3, zumindest einer vorgegebenen Transformation unterzogen werden.

Die dargestellte Ausführungsform der Erfindung ist besonders gut für relativ kleine Verzerrungen geeignet. Bei großen Verzerrungen kann eine Kombination mit anderen Verfahren erfolgen (z.B. Umrisssuche). Dadurch soll erreicht werden, dass sich Master- und Gegenstandsbild ähnlich genug sind, was vor allem für die Passpunktsuche wichtig ist.

## Patentansprüche

1. Verfahren zur Ermittlung eines Abbilds eines Gegenstands (O) mit einer Mehrzahl von Sensoren (10, 20, 30) umfassend jeweils eine Anzahl von Pixelsensoren (11, 21, 31),
- wobei die Pixelsensoren (11, 21, 31) desselben Sensors (10, 20, 30) jeweils dasselbe Empfindlichkeitsspektrum (S₁, S₂, S₃) aufweisen und die Pixelsensoren (11, 21, 31) unterschiedlicher Sensoren (10, 20, 30) jeweils unterschiedliche Empfindlichkeitsspektren (S₁, S₂, S₃) aufweisen, und
- wobei mit jedem der Sensoren (10, 20, 30) jeweils ein Bild (I₁, I₂, I₃) desselben Teilbereichs des Gegenstands (O) erstellt wird, wobei das Abbild des Gegenstands (O) mit den Bildern (I₁, I₂, I₃) erstellt wird,
**dadurch gekennzeichnet,**
- **dass** in den von den einzelnen Sensoren (10, 20, 30) erstellten Bildern (I₁, I₂, I₃) mit jeweils unterschiedlichem Empfindlichkeitsspektrum (S₁, S₂, S₃) nach Abbildern desselben Teilbereichs des Gegenstands (O) gesucht wird, indem einzelne Teilbilder (I_{1,1} ... I_{1,n}, I_{2,1} ... I_{2,n} I_{3,1} ... I_{3,n}) der Bilder (I₁, I₂, I₃) miteinander korreliert werden, und
- **dass** miteinander korrelierende Teilbilder (I_{1,1} ... I_{1,n}, I_{2,1} ... I_{2,n}, I_{3,1} ... I_{3,n}) aus den Bilder (I₁, I₂, I₃) ermittelt und einander zugeordnet werden und gegebenenfalls einzelne Bereiche oder Pixel einander zugeordneter Teilbilder (I_{1,1} ... I_{1,n}, I_{2,1} ... I_{2,n}, I_{3,1} ... I_{3,n}) einander aufgrund der Korrelation zugeordnet werden.

2. Verfahren nach Anspruch 1, **dadurch gekennzeichnet,**
a) **dass** Zeilensensoren als Sensoren (10, 20, 30) verwendet werden, deren Pixelsensoren (11, 21, 31) in Form von Zeilen auf dem jeweiligen Sensor (10, 20, 30) angeordnet sind, oder dass als Sensoren (10, 20, 30) Sensorzeilen von Flächensensoren verwendet werden,
b) **dass** der abzubildende Gegenstand relativ zu den Sensoren (10, 20, 30), insbesondere normal zur Zeilenrichtung der Zeilensensoren oder Sensorzeilen, bewegt wird und dabei durch den Aufnahmebereich der Sensoren (10, 20, 30) gelangt,
c) **dass** als Teilbilder (I_{1,1} ... I_{1,n}, I_{2,1} ... I_{2,n}, I_{3,1} ... I_{3,n}) jeweils von den Sensoren (10, 20, 30) erstellte Zeilenbilder herangezogen werden.

3. Verfahren nach Anspruch 1 oder 2, **dadurch gekennzeichnet, dass** der Unterschied (Δp) der jeweiligen Bildposition der miteinander korrelierenden Bereiche in unterschiedlichen Teilbildern (I_{1,1} ... I_{1,n}, I_{2,1} ... I_{2,n}, I_{3,1} ... I_{3,n}) ermittelt und als Versatz (Δp) den jeweiligen Bereichen zugeordnet wird,
- dass aufgrund des Versatzes (Δp) eine Tiefeninformation erstellt wird, die den Abstand (d) oder die Relativposition des auf die korrelierenden Bereiche abgebildeten Teilbereichs des Gegenstands (O) zu den Sensoren (10, 20, 30) oder zu einem in Bezug auf die Sensoren (10, 20, 30) festgelegten Referenzpunkt angibt, und
- dass der Abstand (d) oder die Relativposition (Δr) zumindest einem der miteinander korrelierenden Bereiche zumindest einem der korrespondierenden Bereiche des Bilds (I₁, I₂, I₃) zugeordnet wird.

4. Verfahren nach Anspruch 3, **dadurch gekennzeichnet, dass** die Relativposition (Δr) des in den Bildern abgebildeten Teils des Gegenstands (O) auf Grundlage der durch die Lage und Ausrichtung der Sensoren (10, 20, 30) und der Pixelsensoren (11, 21, 31) auf den Sensoren (10, 20, 30) sowie gegebenenfalls auf Grundlage der Beschaffenheit, Form, Lage und Ausrichtung einer den Pixelsensoren vorgeschalteten optischen Einheit, insbesondere eines Objektivs (13, 23, 33), ermittelt wird.

5. Verfahren nach einem der Ansprüche 3 oder 4, **dadurch gekennzeichnet, dass** für die einzelnen Pixel zumindest eines der Bilder (I₁, I₂, I₃) die jeweiligen den Pixeln (11, 21, 31) zugeordneten Relativpositionen (Δr) oder Abstände (d) ermittelt werden und diese Relativpositionen (Δr) oder Abstände (d) dem Abbild als weiterer Kanal zugeordnet werden.

6. Verfahren nach einem der vorangehenden Ansprüche, **dadurch gekennzeichnet,**
- **dass** der Unterschied (Δp) der jeweiligen Bildposition der miteinander korrelierenden Bereiche in unterschiedlichen Bilder (I₁, I₂, I₃) ermittelt und als Versatz (Δp) den jeweiligen Bereichen zugeordnet wird,
- **dass** die einzelnen Bilder (I₁, I₂, I₃) miteinander aufgrund des Versatzes (Δp) der miteinander korrelierenden Bereiche in Übereinstimmung gebracht werden und ein Abbild erstellt wird.

7. Verfahren nach einem der vorangehenden Ansprüche, **dadurch gekennzeichnet,**
- **dass** vor der Ermittlung eines Abbilds eines Gegenstands (O) ein Abbild eines Referenzgegenstands an einer vorgegebenen Relativposition gegenüber den Sensoren oder mit einer vorgegebenen Relativbewegung gegenüber den Sensoren ermittelt wird, wobei eine Referenzzuordnung zwischen den einzelnen von den Sensoren erstellten Bildern festgelegt wird und
anschließend ein Gegenstand nach einem der vorangehenden Ansprüche aufgenommen wird, der auf dieselbe vorgegebene Relativposition gegenüber den Sensoren platziert wird oder der mit derselben vorgegebenen Relativbewegung gegenüber den Sensoren bewegt wird, wobei die Zuordnung zwischen den von den Sensoren aufgenommenen Bildern des Objekts ausgehend von der Referenzzuordnung erstellt wird.

8. Verfahren nach einem der vorangehenden Ansprüche, **dadurch gekennzeichnet, dass** die Teilbilder ((I_{1,1} ...) untereinander korreliert werden, indem auf diese Teilbilder (I_{1,1} ...) zunächst ein Filter, insbesondere ein Kantenfilter, angewendet wird und derart Kantenbilder erstellt werden und diese Kantenbilder auf Übereinstimmung untersucht werden.

9. Verfahren nach einem der vorangehenden Ansprüche, **dadurch gekennzeichnet, dass** die Teilbilder (11,1 ...) untereinander korreliert und einander zugeordnet werden indem eines der von den einzelnen Sensoren (10, 20, 30) erstellten Bilder (11) als Masterbild ausgewählt wird und die einzelnen Bereiche oder Pixel (12,1 ... I2,n, I3,1 ... I3,n) der jeweils anderen Bilder (12, 13) den Teilbildern (11,1 ... 11,n) dieses Masterbilds zugeordnet werden, indem
a) sowohl im Masterbild (I1) als auch in den anderen Bildern (12, 13) einander entsprechende oder gleiche oder nach den gleichen Grundlagen gebildete Koordinatensysteme (x, y) vorgegeben werden,
b) im Masterbild (I1) eine vorgegebene Anzahl von Passpunkten in Form von markanten Bildpunkten oder -bereichen gewählt oder festgelegt wird,
c) in den anderen Bildern (12, 13) nach den, den im Masterbild (11) bestimmten Passpunkten, entsprechenden Passpunkten gesucht wird,
d) dass mit den in den anderen Bildern (12, 13) aufgefundenen Passpunkten und den im Masterbild (I1) vorgegebenen Passpunkten die durch eine unterschiedliche Lage der Passpunkte im Masterbild (11) und in den anderen Bildern (12, 13) im Koordinatensystem bedingten Verschiebungsvektoren ermittelt werden, mit denen die jeweiligen Passpunkte des einen Bildes in die Passpunkte des anderen Bildes übergeführt werden können,
e) dass mit den für die Passpunkte im Masterbild (I1) erhaltenen Verschiebungsvektoren durch Interpolation weitere Verschiebungsvektoren für eine bestimmte Anzahl der, vorzugsweise für alle, Bildpunkte des Masterbildes (I1) jeweils ein zugehöriger Verschiebungsvektor berechnet wird, der die Lage des dem jeweiligen Bildpunkt des Masterbildes (11) zugeordneten Punktes oder Bildpunktes in den anderen Bildern (12, 13) festlegt.

10. Datenträger, auf dem ein Programm zur Durchführung eines Verfahrens nach einem der vorangehenden Ansprüche abgespeichert ist.
